# EUROPEAN PATENT SPECIFICATION

(11) **EP 0 488 664 B1**
(45) Date of publication and mention of the grant of the patent: **13.04.1994**
(21) Application number: 91310904.7
(22) Date of filing: 27.11.1991
(51) Int. Cl.: B21D 53/08

(54) **Heat exchanger assembly with wrapped tubing**
Wärmetauscher mit gewickelten Rohren
Echangeur de chaleur à tubes enroulés

(30) Priority: 29.11.1990 US 619869; 16.10.1991 US 777026
(43) Date of publication of application: 03.06.1992
(73) Proprietor: Peerless of America, Incorporated, Chicago Illinois 60646 (US)
(72) Inventor: Paulman, Roger, Barrington, Illinois 60010 (US); Wohrstein, Franz X., Park Ridge, Illinois 60068 (US)
(74) Representative: Newby, Martin John

(56) References cited:
- FR-A- 2 189 140
- GB-A- 914 083
- US-A- 1 802 161
- US-A- 2 771 934
- US-A- 4 881 311

## Description

This invention relates to heat exchangers and more particularly to heat exchangers of the side-entry type as known from US-A- 4881311, which forms the base of the preamble of claims 1 and 8 and to a method of making the same.

Side-entry type heat exchangers have a plurality of cross fins with open-ended notches formed in their marginal edge portions. The notches in the cross-fins are aligned in rows, and heat exchanger tubing is inserted transversely into the aligned notches, threading the notches from row to row. The provision of open-ended notches along the marginal edges of the fin arrays enables the use of a one-piece heat exchanger tube.

Although the inner diameter of the notches in the fins corresponds to the outer diameter of the tube, the peripheral contact between the fins and the tube is reduced by at least the width of the open-end portion of the notch through which the heat exchanger tube is inserted into the fin array. Accordingly, to maximize contact between cross-fins and the heat exchanger tube, it is common practice in the manufacture of side-entry type heat exchangers to form the notches with a relatively narrow entry or throat portion leading into a generally circular relatively large diameter portion sized to the outer diameter of the heat exchanger tube. During the assembly of the tube fin array, the tube is slightly flattened from its circular cross-section to facilitate its insertion transversely through the entry portion of the notch into the circular portion of the notch. The tube is then expanded by subjecting the tube to internal high pressure. Such expansion ion both interlocks the cross-fins and the tube against removal and enhances peripheral contact between the tube and the fin array.

One known arrangement for assembling a heat exchanger tube on such fin array includes preforming the tube to a helical shape and pressing the preformed tube into the notches of the fin array. Such method of assembly is not well suited for mass production because of the need to insert the fin assembly into the preformed tube, align each pass of the tube with an associated row of notches in the fin array and then press each tube section into its associated notches.

A further consideration is that assembling of a one-piece heat exchanger tube on such fin array requires forming of return bend portions to provide multiple passes of the heat exchanger tube along the surfaces of the fin unit. Although such bending causes "kinking" of the tube, usually any kinks in the return bend portions will be "blown out" when the tube is subjected to internal high pressure during expansion of the tube to engage the side walls of the body portions of the fin assembly. However, some of the portions of the heat exchanger tube which define the return bends may not be returned to their original circular cross-diameter shape, resulting in flow restriction in one or several of the return bends, reducing the efficiency of the heat exchanger assembly.

Thus, it would be desirable to have a side-entry type heat exchanger of the type employing a one-piece heat exchanger tube which when assembled with a fin array, is substantially free of flow restriction in return bend portions.

### Summary of the Invention

It is therefore an object of the present invention to provide a method and apparatus for making a heat exchanger assembly of the side-entry type which is easier to manufacture and assemble than heat exchanger assemblies presently available.

Another object of the invention is to provide a method and apparatus for making a heat exchanger assembly which is more compact and more rugged than known heat exchanger assemblies, and which affords increased efficiency while providing a more compact heat exchanger assembly.

Yet another object of the invention is to provide a method and apparatus for wrapping a heat exchanger tube onto a heat transfer array to produce a heat exchanger assembly.

In accordance with the invention, there is provided a method of making a heat exchanger assembly of the type including a heat transfer array having at least one fin unit and a single length of heat exchanger tube. The heat transfer array has first and second parallel surfaces each defining a plurality of fins with each of the fins having notches which are aligned in sets on the first and second surfaces. The tube is applied to the heat transfer array, threading the notches in the fins thereof, defining a first plurality of pass sections threading the notches on the first surface and a second plurality of parallel passes threading the notches on the second surface, and return bend portions interconnecting adjacent pass portions on the first and second surfaces. The method includes the steps of producing relative rotation between the heat transfer array and the tube to cause the tube to be wrapped onto the heat transfer array and indexing the tube relative to the heat transfer array as the tube is being wrapped thereon to direct the tube alternately into a set of notches on the first and second surfaces. The method further includes maintaining tension on the heat exchanger tube while it is being wrapped around the heat transfer array, threading the notches of the fins thereof to thereby produce a generally rectangular cross section for the tube in the return bend portions with a plurality of inwardly directing rib portions, and, upon completion of the wrapping of the tube on the heat exchanger array, expanding the return bend portions to a generally rectangular shape to maximize the cross sectional area of the tubing in the return bend portions.

Further, in accordance with the invention, there is provided apparatus for producing a heat exchanger assembly of the type including a heat transfer array having at least one fin unit and a single length of heat exchanger tube. The heat transfer array has first and second parallel surfaces with the fins defined thereon and notches in the fins aligned in sets on the first and second surfaces. The heat exchanger tube is mounted on the heat transfer array and defines pass portions threading the notches on the first and second surfaces and return bend portions interconnecting the pass portions on the first and second surfaces. The apparatus comprises means for producing relative rotation between the heat transfer array and the heat exchanger tube, causing the heat exchanger tube to be wrapped onto the heat transfer array. The apparatus further comprises indexing means for indexing the tube relative to the heat transfer array as the tube is being wrapped thereon to direct the tube alternately into a set of notches on the first and second surfaces and means for maintaining tension on said heat exchanger tube as it is being wrapped onto the heat transfer array. In addition, forming means defines the pitch of the return bend portions of the heat exchanger tube as it is being wrapped onto the heat transfer array, the forming means being constructed and arranged to maintain substantially square cross section for the return bend portions during subsequent expansion of the heat exchanger tube.

This invention consists of certain novel features and structural details hereinafter fully described, illustrated in the accompanying drawing.

### Description of the Drawings

For the purpose of facilitating and understanding the invention, there is illustrated in the accompanying drawings a preferred embodiment thereof, from an inspection of which, when considered in connection with the following description, the invention, its construction and operation, and many of its advantages will be readily understood and appreciated.
FIG. 1 is a side elevational view of a simplified representation of a heat exchanger assembly and apparatus for producing the heat exchanger assembly in accordance with the present invention;
FIG. 2 is a top plan view of a simplified representation of the heat exchanger assembly and the apparatus illustrated in FIG. 1;
FIG. 3 is an end view of a heat exchanger assembly produced in accordance with the present invention;
FIG. 4 is a cross-sectional view of the heat exchanger tube taken along the lines 4-4 of FIG. 2;
FIG. 5 is a cross-sectional view of the heat exchanger tube taken along lines 5-5 of FIG. 2;
FIG. 6 is a sectional view of the heat exchanger tube taken along the lines 6-6 of FIG. 2;
FIG. 7 is a sectional view of the heat exchanger assembly taken along the lines 7-7 of FIG. 2;
FIG. 8 is a top plan view of the winding mandrel of the apparatus illustrated in FIG. 1 with a fin unit shown in phantom;
FIG. 9 is a front elevational view of the mandrel illustrated in FIG. 1;
FIG. 10 is a side elevational view of the mandrel illustrated in FIG. 1;
FIG. 11 is a side elevational view of a form member of the apparatus illustrated in FIG. 1;
FIG. 12 is a front elevational view of a pair of adjacent form members such as the one illustrated in FIG. 11;
FIG. 13 is a side elevational view of a form member and a portion of the winding mandrel cooperating in forming a return bend for the heat exchanger tube;
FIG. 13A is a sectional view taken along the lines 13A-13A of FIG. 13;
FIG. 13B is a sectional view taken along the lines 13B-13B of FIG. 13;
FIG. 13C is a sectional view taken along the lines 13C-13C of FIG. 13;
FIG. 14 is a simplified representation of a heat exchanger assembly illustrating expansion of the pass portions of the tubing during the manufacturing of the heat exchanger assembly;
FIG. 15 illustrates the cross-section of tube return bend portions for the completed heat exchanger assembly;
FIG. 16 illustrates the cross-section of tube pass portions for the completed heat exchanger assembly;
FIG. 17 is an end view of a heat exchanger assembly having a plurality of fin units and which is produced in accordance with the present invention;
FIG. 18 is a side elevational view of a simplified representation of the heat exchanger assembly of FIG. 17 which has a plurality of fin units and apparatus provided by the present invention for producing the heat exchanger assembly.
FIG. 19 is a sectional view of the heat exchanger assembly;
FIG. 20 is a front sectional view of the mandrel of the apparatus of FIG. 8; and
FIG. 21 is a simplified representation of a heat exchanger assembly having a plurality of fin units, illustrating expansion of the pass portions of the tubing during the manufacturing of the heat exchanger assembly.

### Description of a Preferred Embodiment

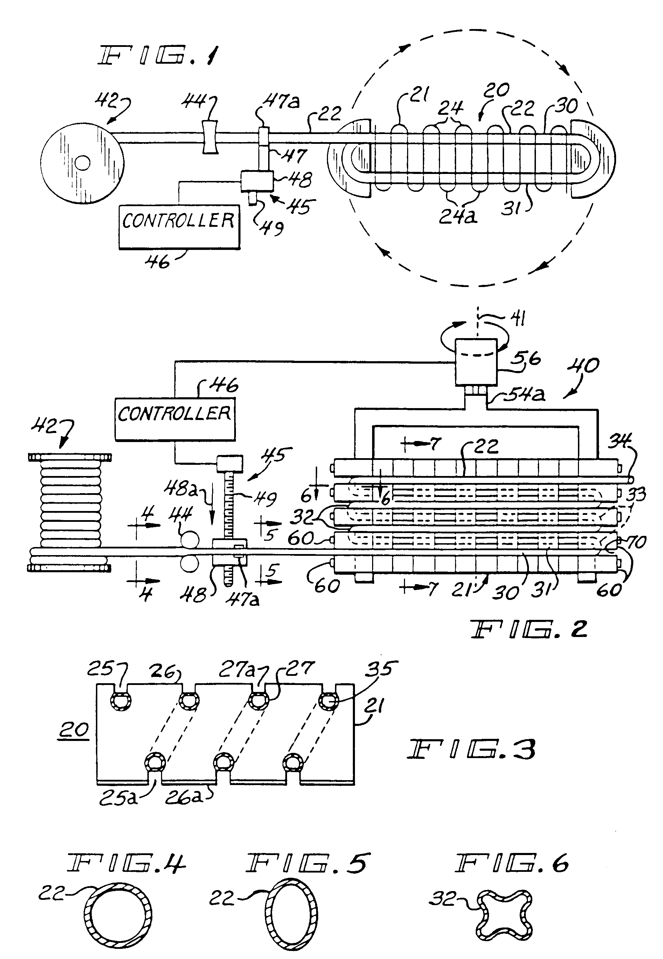

Referring to FIGS. 1 and 2, there is shown a simplified representation of a heat exchanger assembly 20 and apparatus for producing the heat exchanger assembly in accordance with the present invention. The heat exchanger assembly 20 shown in FIGS. 1, 2 and 3, includes a heat transfer array including at least one fin unit 21 and a one-piece heat exchanger tube 22. The fin unit defines a plurality of rows of aligned notches or slots 25 and 25a, in its upper surface 26 and its lower surface 26a, respectively. The single length of tube is wrapped around the fin unit threading or laid in the series of notches 25, 25a provided in respective surfaces 26, 26a of the fin unit. The fin unit is of the side-entry type and is formed from a single thin sheet of metal, such as aluminum, which is folded back and forth upon itself defining a plurality of fins 24 and 24a for the fin unit. Each notch has a circular portion 27 and a narrow throat portion 27a. By way of example, the heat transfer array may be similar to that illustrated in FIG. 9 of U.S. Patent No. 4,881,311, including a single fin unit having notches in both surfaces.

The heat exchanger tube 22 is formed of a bendable material, such as aluminum, and preferably consists of a unitary tubular member of circular cross-section having a diameter of about 0.375 inches and a wall thickness of about 0.016 inches. A heat exchanger tube having such dimensions affords sufficient mechanical strength to withstand internal pressure without rupturing while being capable of being compressed when subjected to forces on opposite sides of the tube, to facilitate insertion into the fin units. When the tube 22 is assembled with the fin unit, as shown in FIG. 2, it is formed into a pattern having an upper row of passes 30 and a lower row of passes 31. At the left-hand side of the assembly (as viewed in FIG. 2), the adjacent passes 30 and 31 in each of the upper and lower rows are interconnected at their ends by return bend portions 32 of the one-piece tube 22. Similarly, at the right-hand side of the assembly, the passes 30, 31 in the two rows are interconnected by return bend portions 33. One of the passes extends outwardly beyond the fin unit 21 to define a fluid inlet 34 (FIG. 2) for the tube 22, and one of the passes extends outwardly from the fin unit to define a fluid outlet 35 (FIG. 3) for the tube.

Referring to FIGS. 1 and 2, the apparatus for producing the heat exchanger assembly includes a rotating mandrel 40, shaping apparatus 44, guide apparatus 45 and a plurality of form guide members 60 associated with the mandrel. The mandrel 40 supports the fin unit 21 for rotation about an axis 41 while drawing the tube 22 from a source 42 of tubing. In practice, the source of tubing 42 is located ten to twelve feet away from the winding mandrel. The form guide members 60 are carried by and cooperate with the mandrel to define forming channels which define the pitch of the return bend portions 32 and 33 of the tube 22.

The tube 22 is drawn through the shaping apparatus 44 which compresses the tube vertically as viewed in FIG. 1, to change the shape of the tube from its generally circular cross section as illustrated in FIG. 4 to a generally circular cross section as illustrated in FIG. 5. The tube is flattened slightly to the oval shape to facilitate laying the tube 22 into the notches 25, 25a of the fin unit 21, as illustrated in FIG. 7, as the tube is wrapped onto the fin unit. It is pointed out that tube segments of oval cross section and pre cut to predetermined lengths could be used rather than continuous length tubing which is cut to the desired length after being wrapped onto the fin unit.

The guide apparatus 45 is operated by a controller 46 and includes a guide arm 47 terminating in guide portion 47a which directs and lifts the tube 22, indexing the end of the tube for its insertion into the notches 25, 25a as the fin unit 21 is rotated by the mandrel 40. The phrase "end of the tube" means that portion of the tube being inserted into the notches at any given time during the wrapping process. The controller 46 senses the position of the end of the heat exchanger tube 22 as the tube is being laid in each row of notches of the fin unit and repositions the guide arm 47 and the tube carried thereby at the end of each pass. For example, the position of the end of the tube in the fin unit may be correlated to the angular position of the mandrel 40. That is, when the mandrel is oriented horizontally, as illustrated in FIG. 1, the tube is being laid in the middle portion of the row of notches on the upper surface of the fin unit. With 90° of rotation, the mandrel is oriented vertically and a return bend is being formed, etc.

The guide arm 47 is carried by a drive mechanism 48 which rides on a track 49 which extends transversely of the end of the fin unit 21. By way of example, the track 49 may comprise an operating screw arranged to move the drive mechanism 48 and the guide arm 47 forward, in the direction of the arrow 48a (FIG. 2) one inch and then backwards one-half inch, a distance corresponding to the separation between adjacent passes of the tube 22 as wound on the fin unit 21. Thus with each forward movement of the drive mechanism 48, the tube is advanced approximately one-half inch in the forward direction so as to be aligned with the next row of notches. The drive mechanism 48 is advanced with each 180° rotation of the rotating mandrel 40 so that the end of the tube is aligned or indexed alternately with the notches on the upper and lower surfaces of the fin unit as the fin unit is rotated by the mandrel 40. The drive mechanism 48 is moved as the fin unit is approaching a generally vertical orientation ( i. e., 90° of rotation from the position illustrated in FIG. 1).

Referring to FIGS. 8-12, the rotating mandrel 40 includes a yoke 51 having a pair of support arms 52 and 53 interconnected by a cross member 54. The support arms 52 and 53 are spaced apart sufficiently to receive the fin unit 21 therebetween. The folded fin unit 21 affords sufficient resilience so as to be self-supporting between the support arms 52 and 53. However, suitable support pins (not shown) may be provided to support the fin unit during the wrapping process. The outer surfaces 55 of both support arms have a convex curved configuration as illustrated in FIG. 9. Each of the support arms 52 and 53 has a plurality of sets of holes 56 formed in their outer surfaces 55 for indexing and maintaining the form devices 60 on the mandrel 40. The yoke 51 is coupled to a suitable drive mechanism 56 for rotation thereby.

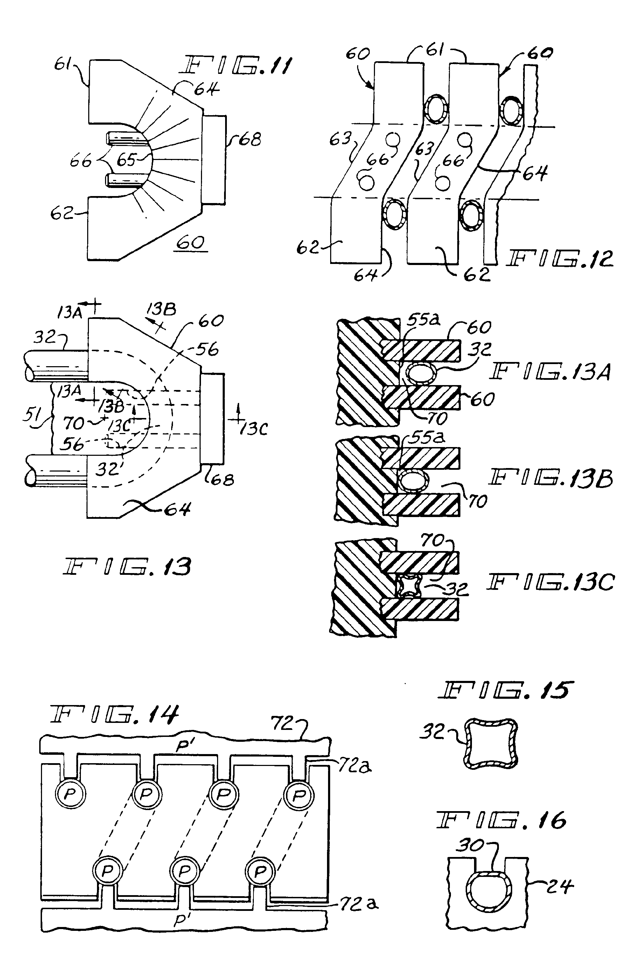

Each of the form guide members 60 is a generally C-shaped member, of phenolic or other rigid plastic material, with its ends 61 and 62 offset laterally one from the other as illustrated in FIG. 12, defining skewed side surfaces 63 and 64 and a generally arcuate inner surface 65. The distance "s" between the centerline of end 61 and the centerline of end 62 corresponds to the amount of displacement of the return bend portion of the tube, which in turn corresponds to the spacing between the upper and lower slots (FIG. 7). In the exemplary embodiment, the spacing is one-half inch. The radius of curvature "r" of inner surface 65 of the form guide member 60 corresponds to the radius of curvature of the outer surfaces 55 of the mandrel support arms 52 and 53. The form guide member 60 includes a pair of laterally offset, horizontally extending pins 66 which are received in the holes 56 in the support arms 52 and 53. The form guide member 60 includes a metallic support plate 68 at its rearward side which interconnects the pins 66 and may cooperate with a positioning apparatus (not shown) to remove the form members from the mandrel after forming the return bends of the tube 22.

Referring to FIGS. 1, 2, 8 and 11-13, the form members 60 are mounted on the mandrel 40 prior to a tube wrapping operation. In the exemplary embodiment wherein the fin unit has four rows of notches provided on its upper surface and three rows notches provided on its lower surface, five form members are mounted on each of the two support arms 52 or 53 with their pins 66 extending into the corresponding pair of holes 56. The tolerance between the pins 66 and the holes 56 is such as to provide an interference fit. When the form members 60 are mounted on the mandrel 40, the mandrel curved outer edge surfaces 55 are received between ends 61 and 62 of the form members as shown in FIG. 13 for one of the form members 60. The form members 60 are spaced apart from one another laterally defining a generally diagonal space or channel 70 (FIG. 2) between one row of notches on the upper surface and an adjacent row of notches on the lower surface. The shape of the diagonal space 70 corresponds to the pitch of the return bends. A portion 55a of the curved edge 55 of the mandrel support arm between adjacent form members is exposed in the space 70 as illustrated in FIG. 13.

Referring to FIGS. 1 and 2, in manufacturing of the heat exchanger assembly 20 in accordance with the present invention, a fin unit 21 is mounted on the mandrel 40. Then the free end of the heat exchanger tube 22 is drawn manually from the source 42 through the shaping apparatus 44 and laid in the first row of notches, and pushed thereonto. When the tube is seated in the first row of notches the tube is secured to the fin unit. Then the drive mechanism 56 is activated to rotate the mandrel 40 clockwise during the wrapping operation, as illustrated in FIG. 1, drawing the tube 22 from the source 42 of tubing. As the tube is drawn through the shaping apparatus 44, its cross section is formed to a generally oval shape as illustrated in FIG. 5.

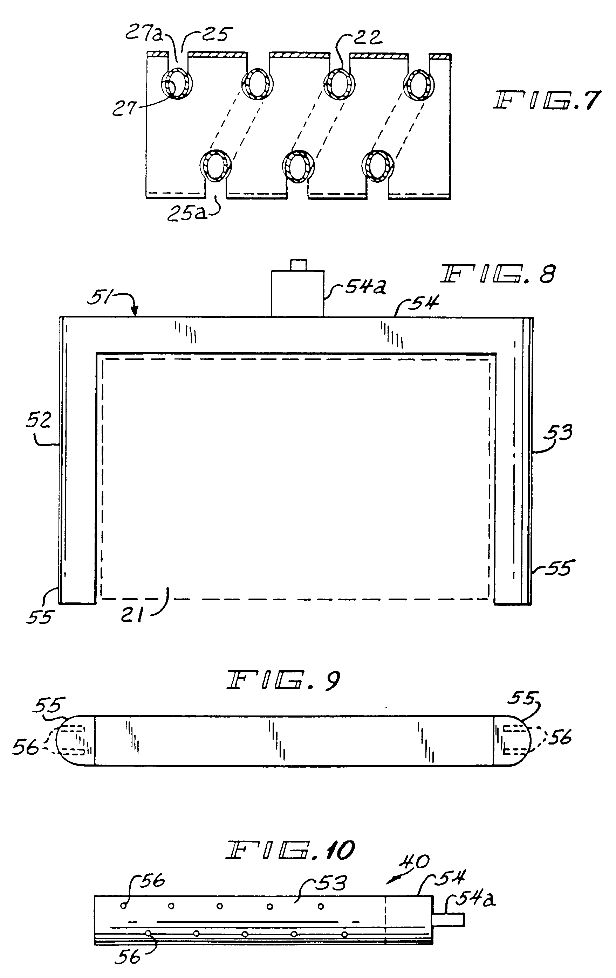

As the mandrel reaches a vertical position, the guide arm 47 is moved to redirect the ovalized tube 22 through form members 60 which define the first return bend to orient the tube to be directed into the first row of notches on the lower surface of the fin unit as the mandrel 40 rotates. Referring to FIGS. 13A-13B, when the tube is initially positioned between form guides 60, as the mandrel approaches a vertical position, it is spaced from the surface 55a of the mandrel (FIG. 13A). As the mandrel rotates to a vertical position, the tube 22 is pulled against surface 55a (FIG. 13B). With continued rotation, tension on the tube 22 while it engages surfaces 55a, 63 and 64 causes deformation of the tube from its oval shape to square shape with inwardly directed ribs. (FIG. 13C). The controller 46 senses the end of the row of notches and raises the end of the tube and moves the end of the tube forward to the next row of notches on the lower surface of the fin unit which has rotated 180°. The wrapping process continues until the tube is wrapped around the fin unit 21 and is laid in each of the rows of notches. The tube pass portions 30 and 31 have the configuration illustrated in FIG. 5, and return bend portions 32 and 33 have the generally square configuration shown in FIG. 6.

Thus, the mandrel 40 rotates the fin unit 21 during wrapping of the tube 22 thereon, the support arms 52 and 53 cooperate with form guide members 60 to form the return bends 32 and 33 in the tube at its return bend portions. In accordance with a feature of the invention, the pass sections 30 and 31 of the tube 22 extending along both the upper end lower surfaces of the fin unit 21 are parallel to one another. The offset portions of the tube are formed only at the return bend portions of the tube at the edges of the fin unit. The form guide members 60 and the support arms 52 and 53 cooperate to maintain the return bend portions of the tube generally rectangular in cross section with the inwardly directed ribs in the tube provided as the result of the tension on the tube while it is being wrapped on the fin unit. The cross section of the return bends, illustrated in FIG. 6, becomes a generally square configuration, as illustrated in FIG. 15, after expansion of the tube. This results in the maximum cross section possible with control led bending in assembling the tube with the fin unit 21.

After the tube 22 has been wrapped around the fin unit 21 and is laid in the notches 25 and 25a, the tube is severed from the supply, defining the fluid outlet 35.

Then, with the form guide members 60 still in place, a pushing device 72, (FIG. 14) is deployed to push the tube pass portions, seating them in the notches. The pushing device may be in the form of upper and lower magazines each including a plurality of tines 72a adapted to engage the tube along each of its pass portions 30 and 31 in each notch and urge the tube downwardly from the top (and upwardly from the bottom) into the circular portions of the notches 25 and 25a during expansion of the tube.

Then, the fluid outlet 35 of the tube 22 is closed and the tube is expanded by applying internal pressure to the tube through its fluid inlet 34. Pressure in the order of 400 to 900 psi is applied, simultaneously expanding the pass portions 30 and 31 and the return bend portions 32 and 33 of the tube 22. The pushing device 72 prevents the tube from expanding back into the narrow throat portions of the slots so that the resultant cross section of the pass portions 30 and 31 is generally "D" shaped as illustrated in FIG. 16. The form devices 60 and the curved surface portions 55a of the mandrel serve as form retainers to maintain the generally square cross section for the return bend portions 32 and 33 of the heat exchanger tube, illustrated in FIG. 15.

After the tube has been expanded, the pushing device 72 is retracted and the form guide members 60 are removed in a suitable manner either manually, or automatically as by coupling their metallic support plates 68 to a positioning apparatus (not shown). In the fin section it may be preferable to strike the tube a second time with device 72 to form the tube in the "D" shape if the pressure P is high for tube expansion. Because the form members 60 are made of phenolic or the like, their side surfaces 63 and 64 which are engaging the tube return bends are slippery, facilitating their removal. When the form guide members are removed, the heat exchanger assembly can be slipped off of the mandrel.

Referring to FIGS. 17-19, in accordance with a further embodiment of the invention, a heat exchanger assembly 20′ includes a heat transfer array 120 having a pair of fin units 121 and 121a. The heat transfer array 120 may be similar to the heat transfer array including two fin units as illustrated in FIG. 5 of U.S. Patent No. 4,811,311. Fin unit 121 defines a plurality of rows of aligned notches or slots 125 in its outer surface 126 which defines the upper surface of the heat transfer array 120. Similarly, fin unit 121a defines a plurality of aligned notches or slots 125a in its outer surface 126a which defines the lower surface of the heat transfer array 120. The fin units 121 and 121a have respective inner or rearward surfaces 127 and 127a. The fin units 121 and 121a are positioned in back-to-back relation with their respective rearward surfaces 127 and 127a adjacent to one another either in contact with one another or in a spaced relation as illustrated in FIGS. 17-19.

The heat exchanger tube 22 is wrapped around the heat transfer array 120 formed by the two fin units 121 and 121a to form the heat exchanger assembly 20'.

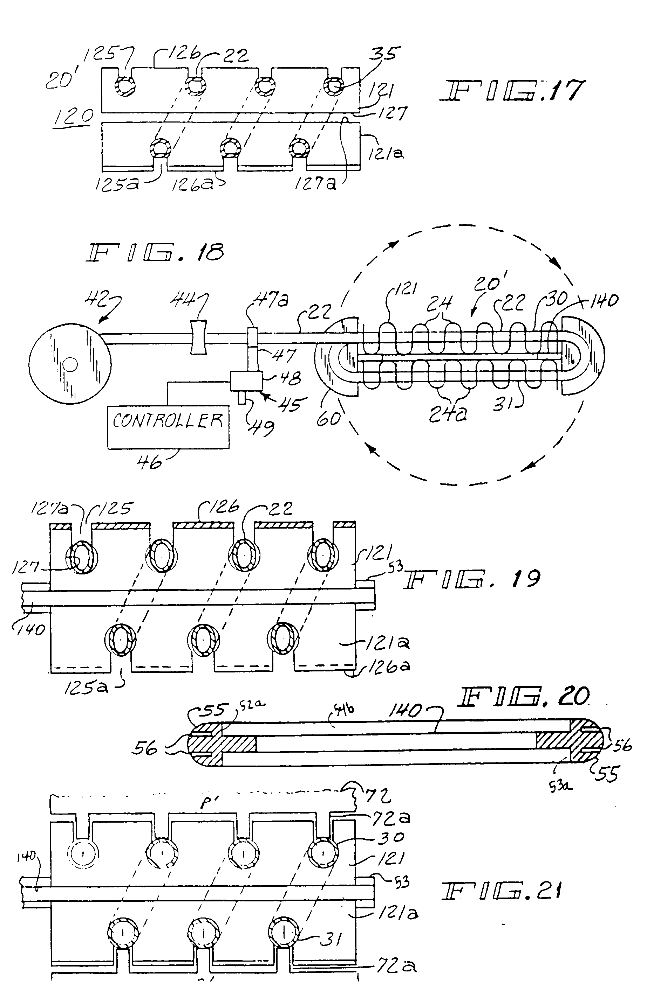

Referring to FIG. 18, the method and apparatus for wrapping the heat exchanger tube 22 onto the heat transfer array 120 is substantially the same as that described above for heat exchanger assembly 20. However, the mandrel 40 includes means for maintaining the two fin units 121 and 121a in a spaced relationship while rotating the heat transfer array 120 and drawing the tube 22 from the source 42 of tubing. Referring to FIGS. 18-20, by way of example, the fin units 121 and 121a are maintained in spaced relation by inwardly directed projections 140 which extend along the inner surfaces 52a, 53a and 54b of the support arms 52 and 53 and cross member 54 of mandrel 40. The length of the projections 140 is sufficient to support the fin units 121 and 121a on the mandrel 40, and the height of the projections 140 is predetermined to establish a desired spacing between the rearward surfaces 127 and 127a of the two fin units 121 and 121a.

After the tube 22 has been wrapped around the heat transfer array 120 and is layed in the notches 125 and 125a, then with the form guide members 60 still in place, pushing device 72 (FIG. 21) is deployed to push the tube passportions 30 and 31, seating them in the notches, in the manner described with reference to the manufacturing of the heat exchanger assembly 20. The tube 22 is expanded by applying internal pressure to the tube through its fluid inlet 34, expanding the pass portions 30 and 31 and the return bend portions 32 and 33 of the tube. The pushing device 71 prevents the tube from expanding back into the narrow throat portions of the slots so that the resultant cross section of the pass portions 30 and 31 is generally "D" shaped as illustrated in FIG. 16, and the inner curved portions of the tube 22 engage the edges of the notches of the fin units 121 and 121a, mechanically connecting the fin units 121 and 121a to the heat exchanger tube 22. After the tube has been expanded, the pushing device 72 is retracted and the form guide members 60 are removed, permitting the completed heat exchanger assembly 20' to be slid off the mandrel 40.

## Claims

1. A method of making a heat exchanger assembly (20) of the type including a heat transfer array having at least one fin unit (21), said heat transfer array having opposed first and second sides and defining a plurality of fins, each of the fins having notches (25, 25a) which are aligned in sets on the first (26) and second (26a) sides with the sets of notches on the first side being offset relative to the sets of notches on the second side, and a single length of heat exchanger tube (22) applied to the heat transfer array, threading the notches in the fins thereof, defining a first plurality of pass sections threading the notches on the first side and a second plurality of parallel passes threading the notches on the second side, and return bend portions (32, 33) interconnecting adjacent pass portions on the first and second sides, characterised in that the method comprises:
wrapping the heat exchanger tube (22) around the heat transfer array;
guiding the tube (22) as it is wrapped around the heat transfer array so as to direct the tube (22) alternatively into sets of notches (25,25a) on the first and second sides (26,26a);
maintaining tension on the heat exchanger tube (22) while it is being wrapped around the heat transfer array, threading the notches (25,25a) of the fins thereof, to thereby produce a deformed cross section for the tube (22) in the return bend portions (32,33) with a plurality of inwardly directed rib portions;
and, upon completion of the wrapping of the tube (22) onto the heat transfer array, expanding the return bend portions (32,33) to a generally rectangular shape to increase the internal cross sectional area of the tube in the return bend portions.

2. A method according to claim 1, characterised in that said heat transfer array (120) comprises first (121) and second (121a) fin units and in that the method further comprises supporting said first and second fin units on a support structure (140) in back-to-back relation prior to wrapping the tube, with said first fin unit defining said first side of said heat transfer array and said second fin unit defining said second side of said heat transfer array.

3. A method according to claim 1, characterised in that the tube is wrapped onto the heat transfer array by rotating the heat transfer array about an axis while drawing the tube onto the heat transfer array, and in that the tube is guided onto the heat transfer array as it is wrapped by monitoring the position of the tube as it is being laid in each set of notches in the heat transfer array and controlling a guide arm(47) to redirect the tube relative to each set of notches in the heat transfer array as the heat transfer array is rotated about said axis.

4. A method according to claim 3, characterised in that the guide arm is moved transversely of the heat transfer array a distance correlated with the amount of offset between sets of notches on the first and second sides of the heat transfer array.

5. A method according to any one of the preceding claims, characterised in that the tube is reshaped from a generally circular cross section to a generally oval cross section prior to wrapping the tube onto the heat transfer array, and in that the pass portions are expanded from a generally oval cross section to a generally circular cross section simultaneously with the expansion of the return bend portions.

6. A method according to any one of the preceding claims, characterised in that guiding of the tube includes providing forming means (60) to define the pitch for each return bend portion for directing the tube between sets of notches on the first and second sides.

7. A method according to claim 6, characterised in that the forming means is removably mounted on a support structure (51) which supports the heat transfer array while the tube is being wrapped thereon, in that the forming means are maintained adjacent to each return bend portion of the heat exchanger tube during expanding of the tube, and in that the forming means is removed from the support structure after the return end portions have been expanded.

8. Apparatus for producing a heat exchanger assembly (20) of the type including a heat transfer array having at least one fin unit (21), said heat transfer array having opposed first (26) and second (26a) sides and having fins with notches (25, 25a) therein aligned in sets on the first and second sides, and a single length of heat exchanger tube (22) mounted on the heat transfer array and defining pass portions threading the notches on the first and second sides and return bend portions (32, 33) interconnecting the pass portions on the first and second sides, characterised in that said apparatus comprises:
means (4) for producing relative rotation between the heat transfer array and means (42) for feeding the heat exchanger tube (22) to the heat transfer array for wrapping the heat exchanger tube onto the heat transfer array;
guiding means (45) for guiding the tube relative to the heat transfer array as the tube is being wrapped thereon to direct the tube alternatively into a set of notches on the first and second sides;
means (44) for maintaining tension on said heat exchanger tube as it is being wrapped onto the heat transfer array;
forming means (60) defining the pitch of the return bend portions of the heat exchanger tube as it is being wrapped onto the heat transfer array;
said forming means (60) being constructed and arranged to maintain substantially square cross section for the return bend portions (32,33) during subsequent expansion of the heat exchanger tube (22).

9. Apparatus according to claim 8, in which said heat transfer array (120) comprises first (121) and second fin (121a) units, characterised in that the apparatus further comprises a support structure (140) for supporting said first and second fin units in back-to-back relation with said first fin unit defining said first side of said heat transfer array and said second fin unit defining said second side of said heat transfer array.

10. Apparatus according to claim 8 or 9, characterised in that said forming means comprises a plurality of forming devices (60) cooperating in pairs to define the pitch of the return bend portions of said heat exchanger tube, each device having a generally C-shaped configuration with first (61) and second (62) ends offset axially a distance corresponding to the axis of adjacent rows of notches in the upper and lower sides of the heat transfer array.

11. Apparatus according to claim 10, characterised in that it includes a supporting structure (51) for supporting the heat transfer array while the tube is being wrapped thereon, said forming devices (60) being removably mountable on said supporting structure and each said forming device having locating means (56) for locating said forming devices on said supporting structure, adjacent forming devices being spaced apart from one another and defining a channel (70) therebetween, the shape of the channel defining the pitch of the return bend portions.

12. Apparatus according to claim 11, characterised in that said supporting structure has first (52) and second (53) parallel opposing support arms adapted to receive and support the heat transfer until therebetween, the radius of curvature of the inner surface of each said forming device conforming generally to the radius of the curvature of an outer surface of the support arms, and the tube being wrapped around the heat transfer array and the support arms.

13. Apparatus according to any one of claims 8 to 12 characterised by means (40) for rotating the heat transfer array about an axis while drawing the tube onto the heat transfer array, said guiding means including a guide arm (47) and controller means (46) for controlling the positioning of said guide arm to redirect the tube relative to each set of notches in the heat transfer array as the heat transfer array is rotated about said axis, and means (48) for moving said guide arm transversely of the heat transfer array a distance correlated with the amount of offset between sets of notches on the first and second sides of the heat transfer array.

## Patentansprüche

1. Methode zur Herstellung einer Wärmeaustauschereinheit (20) in einer Ausführung, die eine Wärmeübertragungsgruppe mit zumindest einer Rippeneinheit (21) enthält, wobei die genannte Wärmeübertragungsgruppe gegenüberliegende erste und zweite Seiten aufweist und eine Mehrzahl von Rippen bildet, wobei jede der Rippen mit Einschnitten (25, 25a) ausgestattet ist, deren satzweise Ausrichtung an den ersten (26) und zweiten (26a) Seiten so vorgesehen ist, daß die Sätze der Einschnitte an der ersten Seite gegenüber den Sätzen der Einschnitte an der zweiten Seite versetzt angeordnet sind, und an der Wärmeübertragungsgruppe angebrachten Wärmeaustauscherrohrstück (22), das durch die in den Rippen vorgesehenen Einschnitte verläuft, eine erste Mehrzahl von durch die Einschnitte an der ersten Seite verlaufenden Strangabschnitten sowie eine zweite Mehrzahl von durch die Einschnitte an der zweiten Seite verlaufenden parallelen Strängen bildet, sowie Umkehrkrümmerabschnitte (32, 33) umfaßt, die nebeneinanderliegende Strangabschnitte an den ersten und zweiten Seiten miteinander verbinden, dadurch gekennzeichnet, daß die Methode:
das Wickeln des Wärmeaustauscherrohres (22) um die Wärmeübertragungsgruppe;
das Führen des Rohres (22), während es um die Wärmeübertragungsgruppe gewickelt wird, um so das Rohr (22) abwechselnd in Sätze der Einschnitte (25, 25a) an den ersten und zweiten Seiten (26, 26a) einzuführen;
das Aufrechterhalten der Spannung, die auf das Wärmeaustauscherrohr (22) ausgeübt wird, während es um die Wärmeübertragungsgruppe gewickelt und in die Einschnitte (25, 25a) der Rippen eingeführt wird, um so einen verformten Querschnitt des Rohres (22) in den Umkehrkrümmerabschnitten (32, 33) mit einer Mehrzahl von nach innen gerichteten Rippenabschnitten herzustellen;
und, nach erfolgtem Wickeln des Rohres (22) um die Wärmeübertragungsgruppe, das Aufweiten der Umkehrkrümmerabschnitte (32, 33) zu einer im allgemeinen rechtwinkligen Form, um so die innere Querschnittsfläche des Rohres in den Umkehrkrümmerabschnitten zu vergrößern,
umfaßt.

2. Methode nach Anspruch 1, dadurch gekennzeichnet, daß die genannte Wärmeübertragungsgruppe (120) erste (121) und zweite (121a) Rippeneinheiten umfaßt, und daß die Methode weiterhin das Abstützen der genannten ersten und zweiten Rippeneinheiten in einer Rücken an Rücken vorgesehenen Anordnung auf einer Stützkonstruktion (140) vor dem Wickeln des Rohres umfaßt, wobei die genannte erste Rippeneinheit die genannte erste Seite der genannten Wärmeübertragungsgruppe und die genannte zweite Rippeneinheit die genannte zweite Seite der genannten Wärmeübertragungsgruppe bildet.

3. Methode nach Anspruch 1, dadurch gekennzeichnet, daß das Wickeln des Rohres um die Wärmeübertragungsgruppe dadurch erfolgt, daß die Wärmeübertragungsgruppe um eine Achse gedreht und das Rohr dabei auf die Wärmeübertragungsgruppe gezogen wird, und daß das Rohr während des Wickelns um die Wärmeübertragungsgruppe dadurch eine Führung erfährt, daß die Position des Rohres, während dieses in jeden Satz der in der Wärmeübertragungsgruppe vorgesehenen Einschnitte eingeführt wird, überwacht wird, und daß ein entsprechend gesteuerter Führungsarm (47) dafür sorgt, daß das Rohr im Verhältnis zu jedem Satz der in der Wärmeübertragungsgruppe vorgesehenen Einschnitte neu ausgerichtet wird, während sich die Wärmeübertragungsgruppe um die genannte Achse dreht.

4. Methode nach Anspruch 3, dadurch gekennzeichnet, daß der Führungsarm quer zur Wärmeübertragungsgruppe um einen Abstand bewegt wird, der in Wechselbeziehung zu der Größenordnung steht, um die die Sätze der Einschnitte an den ersten und zweiten Seiten der Wärmeübertragungsgruppe untereinander versetzt sind.

5. Methode nach einem der vorhergehenden Ansprüche, dadurch gekennzeichnet, daß das Rohr, bevor es um die Wärmeübertragungsgruppe gewickelt wird, von einem im allgemeinen kreisförmigen Querschnitt zu einem im allgemeinen ovalen Querschnitt umgeformt wird, und daß die Strangabschnitte während der Ausweitung der Umkehrkrümmerabschnitte gleichzeitig von einem im allgemeinen ovalen Querschnitt zu einem im allgemeinen kreisförmigen Querschnitt ausgeweitet werden.

6. Methode nach einem der vorhergehenden Ansprüche, dadurch gekennzeichnet, daß das Führen des Rohres die Bereitstellung eines Formgebungsmittels (60) umfaßt, um so die Steigung eines jeden Umkehrkrümmerabschnittes festzulegen, so daß das Rohr zwischen den Sätzen der Einschnitte an den ersten und zweiten Seiten eine entsprechende Ausrichtung erfährt.

7. Methode nach Anspruch 6, dadurch gekennzeichnet, daß das Formgebungsmittel in abnehmbarer Ausführung an einer Stützkonstruktion (51) montiert ist, die die Wärmeübertragungsgruppe abstützt, während das Rohr darumgewickelt wird, daß die Formgebungsmittel, während das Rohr aufgeweitet wird, in der Nähe eines jeden Umkehrkrümmerabschnittes des Wärmeaustauscherrohres verbleiben, und daß das Formgebungsmittel nach dem Aufweiten der Krümmerendabschnitte aus der Stützkonstruktion entfernt wird.

8. Vorrichtung zur Herstellung einer Wärmeaustauschereinheit (20) in einer Ausführung, die eine Wärmeübertragungsgruppe mit zumindest einer Rippeneinheit (21), wobei die genannte Wärmeübertragungsgruppe gegenüberliegende erste (26) und zweite (26a) Seiten aufweist sowie Rippen mit Einschnitten (25, 25a) besitzt, die darin satzweise an den ersten und zweiten Seiten ausgerichtet sind, und ein an der Wärmeübertragungsgruppe angebrachtes Wärmeaustauscherrohrstück (22), das durch die Einschnitte an den ersten und zweiten Seiten verlaufende Strangabschnitte bildet, sowie Umkehrkrümmerabschnitte (32, 33) umfaßt, die die Strangabschnitte an den ersten und zweiten Seiten miteinander verbinden, dadurch gekennzeichnet, daß die genannte Vorrichtung:
ein Mittel (4), um eine relative Drehung zwischen der Wärmeübertragungsgruppe und dem Mittel (42) zu erzeugen, mit dem das Wärmeaustauscherrohr (22) der Wärmeübertragungsgruppe zugeführt wird, um so das Wärmeaustauscherrohr um die Wärmeübertragungsgruppe zu wickeln;
ein Führungsmittel (45), um das Rohr während des Wickelns um die Wärmeübertragungsgruppe im Verhältnis zur Wärmeübertragungsgruppe so zu führen, daß das Rohr abwechselnd in einen Satz der an den ersten und zweiten Seiten vorgesehenen Einschnitte eingeführt wird;
ein Mittel (44), um die Spannung, die während des Wickelns um die Wärmeübertragungsgruppe auf das genannte Wärmeaustauscherrohr ausgeübt wird, aufrechtzuerhalten;
ein Formgebungsmittel (60), das die Steigung der Umkehrkrümmerabschnitte des Wärmeaustauscherrohres während des Wickelns um die Wärmeübertragungsgruppe festlegt;
wobei das genannte Formgebungsmittel (60) so konstruiert und angeordnet ist, daß ein im wesentlichen quadratischer Querschnitt der Umkehrkrümmerabschnitte (32, 33) während der nachfolgenden Ausweitung des Wärmeaustauscherrohres (22) beibehalten wird,
umfaßt.

9. Vorrichtung nach Anspruch 8, wobei die genannte Wärmeübertragungsgruppe (120) erste (121) und zweite (121a) Rippeneinheiten umfaßt, dadurch gekennzeichnet, daß die Vorrichtung weiterhin eine Stützkonstruktion (140) zum Abstützen der genannten ersten und zweiten Rippeneinheiten in einer Rücken an Rücken vorgesehenen Anordnung umfaßt, wobei die genannte erste Rippeneinheit die genannte erste Seite der genannten Wärmeübertragungsgruppe und die genannte zweite Rippeneinheit die genannte zweite Seite der genannten Wärmeübertragungsgruppe bildet.

10. Vorrichtung nach Anspruch 8 oder 9, dadurch gekennzeichnet, daß das genannte Formgebungsmittel eine Mehrzahl von Formgebungseinrichtungen (60) umfaßt, die paarweise zusammenwirken, um so die Steigung der Umkehrkrümmerabschnitte des genannten Wärmeaustauscherrohres festzulegen, wobei jede Einrichtung eine im allgemeinen C-förmige Konfiguration aufweist, bei der die ersten (61) und zweiten (62) Enden axial um einen Abstand versetzt sind, der der Achse angrenzender Reihen von Einschnitten an den oberen und unteren Seiten der Wärmeübertragungsgruppe entspricht.

11. Vorrichtung nach Anspruch 10, dadurch gekennzeichnet, daß diese eine Stützkonstruktion (51) umfaßt, um die Wärmeübertragungsgruppe, während das Rohr um die Wärmeübertragungsgruppe gewickelt wird, abzustützen, wobei die genannten Formgebungseinrichtungen (60) in abnehmbarer Ausführung an der genannten Stützkonstruktion montierbar sind und jede der genannten Formgebungseinrichtungen über Positioniermittel (56) verfügt, um damit die genannten Formgebungseinrichtungen an der genannten Stützkonstruktion entsprechend auszurichten, wobei nebeneinanderliegende Formgebungseinrichtungen mit Abstand zueinander angeordnet sind und einen dazwischenliegenden Kanal (70) bilden, dessen Form die Steigung der Umkehrkrümmerabschnitte festlegt.

12. Vorrichtung nach Anspruch 11, dadurch gekennzeichnet, daß die genannte Stützkonstruktion erste (52) und zweite (53) Stützarme besitzt, die parallel gegenüberliegend angeordnet und so ausgeführt sind, daß sie die Wärmeübertragungsgruppe aufnehmen und abstützen, bis dazwischen der Krümmungsradius der Innenfläche einer jeden genannten Formgebungseinrichtung im allgemeinen dem Krümmungsradius einer Außenfläche der Stützarme entspricht und das Rohr um die Wärmeübertragungsgruppe und die Stützarme gewickelt ist.

13. Vorrichtung nach einem der Ansprüche 8 bis 12, gekennzeichnet durch Mittel (40) zum Drehen der Wärmeübertragungsgruppe um eine Achse, während das Rohr um die Wärmeübertragungsgruppe gezogen wird, wobei die genannten Führungsmittel einen Führungsarm (47) und Steuerungsmittel (46) zur Steuerung der Positionierung des genannten Führungsarmes, der das Rohr gegenüber jedem Satz der in der Wärmeübertragungsgruppe vorgesehenen Einschnitte neu ausrichtet, während die Wärmeübertragungsgruppe um die genannte Achse gedreht wird, sowie Mittel (48) umfassen, um den genannten Führungsarm quer zur Wärmeübertragungsgruppe über eine Distanz zu bewegen, die der Größenordnung entspricht, um die die Sätze der Einschnitte an den ersten und zweiten Seiten der Wärmeübertragungsgruppe untereinander versetzt sind.

## Revendications

1. Procédé pour réaliser un ensemble échangeur de chaleur (20) du type comportant une zone de transfert de chaleur ayant au moins une unité d'ailettes (21), ladite zone de transfert de chaleur ayant un premier côté et un second côté opposés et définissant une pluralité d'ailettes, chacune des ailettes présentant des encoches (25, 25a) qui sont alignées en jeux sur le premier côté (26) et sur le second côté (26a), les jeux d'encoches du premier côté étant décalés par rapport aux jeux d'encoches du second côté, et une longueur unique de tube échangeur de chaleur (22) appliquée sur la zone de transfert de chaleur, engagée dans les encoches des ailettes de celle-ci, définissant une première pluralité de passes engagées dans les encoches du premier côté et une seconde pluralité de passes parallèles engagées dans les encoches du second côté, et des courbes de retour (32, 33) reliant les passes adjacentes sur le premier et le second côté, caractérisé en ce que le procédé comprend les opérations consistant à
enrouler le tube échangeur de chaleur (22) autour de la zone de transfert de chaleur;
guider le tube (22) pendant son enroulement autour de la zone de transfert de chaleur de façon à diriger le tube (22) alternativement dans les jeux d'encoches (25, 25a) du premier et du second côté (26, 26a);
maintenir une traction sur le tube échangeur de chaleur (22) pendant son enroulement autour de la zone de transfert de chaleur, l'engager dans les encoches (25, 25a) des ailettes de celle-ci pour produire ainsi une section transversale déformée du tube (22) dans les courbes de retour (32, 33), avec une pluralité de parties formant des nervures orientées vers l'intérieur;
et, après achèvement de l'enroulement du tube (22) sur la zone de transfert de chaleur, expanser les courbes de retour (32, 33) en une forme généralement rectangulaire pour augmenter la surface intérieure de la section transversale du tube dans les courbes de retour.

2. Procédé suivant la revendication 1, caractérisé en ce que ladite zone de transfert de chaleur (120) comprend une première (121) et une seconde (121a) unités d'ailettes et en ce que le procédé comprend en plus l'opération consistant à supporter ladite première et ladite seconde unités d'ailettes sur une structure porteuse (140) en position dos à dos avant d'enrouler le tube, ladite première unité d'ailettes définissant ledit premier côté de ladite zone de transfert de chaleur et ladite seconde unité d'ailettes définissant ledit second côté de ladite zone de transfert de chaleur.

3. Procédé suivant la revendication 1, caractérisé en ce que le tube est enroulé sur la zone de transfert de chaleur en faisant tourner la zone de transfert de chaleur autour d'un axe tout en tirant le tube sur la zone de transfert de chaleur, et en ce que le tube est guidé sur la zone de transfert de chaleur pendant son enroulement en surveillant la position du tube pendant qu'il est déposé dans chaque jeu d'encoches dans la zone de transfert de chaleur et en commandant un bras de guidage (47) pour réorienter le tube par rapport à chaque jeu d'encoches dans la zone de transfert de chaleur pendant que la zone de transfert de chaleur est en rotation autour dudit axe.

4. Procédé suivant la revendication 3, caractérisé en ce que le bras de guidage est déplacé transversalement par rapport à la zone de transfert de chaleur sur une distance adaptée à la valeur du décalage entre les jeux d'encoches sur le premier et le second côté de la zone de transfert de chaleur.

5. Procédé suivant l'une quelconque des revendications précédentes, caractérisé en ce que le tube est reformé à partir d'une section transversale généralement circulaire en une section transversale généralement ovale avant d'être enroulé sur la zone de transfert de chaleur, et en ce que les passes sont expansées à partir d'une section transversale généralement ovale en une section transversale généralement circulaire simultanément avec l'expansion des courbes de retour.

6. Procédé suivant l'une quelconque des revendications précédentes, caractérisé en ce que le guidage du tube comprend la prévision de moyens de formage (60) pour définir le pas de chaque courbe de retour pour diriger le tube entre des jeux d'encoches sur le premier et le second côté.

7. Procédé suivant la revendication 6, caractérisé en ce que les moyens de formage sont amovibles, montés sur une structure porteuse (51) qui supporte la zone de transfert de chaleur pendant que le tube est enroulé sur celle-ci, en ce que les moyens de formage sont maintenus au voisinage de chaque courbe de retour du tube échangeur de chaleur pendant l'expansion du tube, et en ce que les moyens de formage sont enlevés de la structure porteuse après que les courbes de retour aient été expansées.

8. Dispositif pour produire un ensemble échangeur de chaleur (20) du type comportant une zone de transfert de chaleur ayant au moins une unité d'ailettes (21), ladite zone de transfert de chaleur ayant un premier côté (26) et un second côté (26a) opposés et comportant des ailettes avec des encoches (25, 25a) alignées dans celles-ci en jeux sur le premier et le second côté, et une longueur unique de tube échangeur de chaleur (22) montée sur la zone de transfert de chaleur et définissant des passes engagées dans les encoches du premier et du second côté et des courbes de retour (32, 33) reliant les passes du premier et du second côté, caractérisé en ce que ledit dispositif comprend:
des moyens (4) pour produire une rotation relative entre la zone de transfert de chaleur et des moyens (42) pour amener le tube échangeur de chaleur (22) sur la zone de transfert de chaleur pour enrouler le tube échangeur de chaleur sur la zone de transfert de chaleur;
des moyens de guidage (45) pour guider le tube par rapport à la zone de transfert de chaleur pendant l'enroulement du tube sur celle-ci pour diriger le tube alternativement dans un jeu d'encoches sur le premier et sur le second côté;
des moyens (44) pour maintenir la traction sur ledit tube échangeur de chaleur pendant son enroulement sur la zone de transfert de chaleur;
des moyens de formage (60) définissant le pas des courbes de retour du tube échangeur de chaleur pendant son enroulement sur la zone de transfert de chaleur;
lesdits moyens de formage (60) étant construits et agencés de façon à maintenir substantiellement une section transversale carrée pour les courbes de retour (32, 33) pendant l'expansion ultérieure du tube échangeur de chaleur (22).

9. Dispositif suivant la revendication 8, dans lequel ladite zone de transfert de chaleur (120) comprend une première (121) et une seconde (121a) unité d'ailettes, caractérisé en ce que le dispositif comporte en outre une structure porteuse (140) pour supporter ladite première et ladite seconde unité d'ailettes en position dos à dos, ladite première unité d'ailettes définissant ledit premier côté de ladite zone de transfert de chaleur et ladite seconde unité d'ailettes définissant ledit second côté de ladite zone de transfert de chaleur.

10. Dispositif suivant la revendication 8 ou 9, caractérisé en ce que lesdits moyens de formage comprennent une pluralité d'appareils de formage (60) coopérant par paires pour définir le pas des courbes de retour dudit tube échangeur de chaleur, chaque appareil ayant une configuration générale en forme de C avec la première extrémité (61) et la seconde extrémité (62) décalées axialement d'une distance correspondant à l'axe de rangées adjacentes d'encoches dans le côté supérieur et le côté inférieur de la zone de transfert de chaleur.

11. Dispositif suivant la revendication 10, caractérisé en ce qu'il comporte une structure porteuse (51) pour supporter la zone de transfert de chaleur pendant l'enroulement du tube sur celle-ci, lesdits moyens de formage (60) pouvant se monter de manière amovible sur ladite structure porteuse et chacun desdits appareils de formage ayant des moyens de localisation (56) pour localiser lesdits appareils de formage sur ladite structure porteuse, des appareils de formage adjacents étant espacés l'un de l'autre et définissant entre eux un canal (70) dont la forme fixe le pas des courbes de retour.

12. Dispositif suivant la revendication 11, caractérisé en ce que ladite structure porteuse comprend un premier bras (52) et un second bras (53) de support parallèles opposés adaptés pour recevoir et supporter entre eux la zone de transfert de chaleur, le rayon de courbure de la surface intérieure de chacun desdits appareils de formage étant généralement compatible avec le rayon de courbure d'une surface extérieure des bras de support, et le tube étant enroulé autour de la zone de transfert de chaleur et des bras de support.

13. Dispositif suivant l'une quelconque des revendications 8 à 12, caractérisé par des moyens (40) pour faire tourner la zone de transfert de chaleur autour d'un axe tout en tirant le tube sur la zone de transfert de chaleur, lesdits moyens de guidage comprenant un bras de guidage (47) et des moyens de commande (46) pour commander la mise en place dudit bras de guidage en vue de réorienter le tube par rapport à chaque jeu d'encoches dans la zone de transfert de chaleur lorsque la zone de transfert de chaleur est mise en rotation autour dudit axe, et des moyens (48) pour déplacer ledit bras de guidage transversalement par rapport à la zone de transfert de chaleur sur une distance adaptée à la valeur du décalage entre les jeux d'encoches sur le premier et le second côté de la zone de transfert de chaleur.
